# EUROPEAN PATENT APPLICATION

(11) **EP 1 154 356 A1**
(43) Date of publication of application: **14.11.2001**
(21) Application number: 00440130.3
(22) Date of filing: 09.05.2000
(51) Int. Cl.: G06F 17/30

(54) **Caching of files during loading from a distributed file system**

(71) Applicant: ALCATEL, 75008 Paris (FR)
(72) Inventor: Vermeulen, Christophe, 4690 Roclenge-S-Geer (BE)
(74) Representative: Urlichs, Stefan, Dipl.-Phys.

(57) **Abstract**

In a method for loading files from a distributed file system (15) into a client (11; 40), a cache memory (35; 44) is provided for temporarily storing previously loaded files in order to expedite renewed accesses to the same file. Prior to each loading process, a check (25) is made to see whether a file to be loaded is present in the cache memory (35; 44) or not. If that is the case, the file will be loaded from the cache memory (35; 44); otherwise it will be loaded from the distributed file system (15). For the check, a hash code is computed from the file to be loaded and then used to determine whether the file is contained in the cache memory or not. This makes it possible to determine independently of the address of a file whether the latter is already in the cache. Identical files that came from different locations of the distributed file system are identified as being identical independently of their addresses.

## Description

This invention relates to a method of loading files from a distributed file system wherein loaded files are temporarily stored in a cache memory, wherein prior to each loading process, a check is made to see whether a file to be loaded is present in the cache memory or not, and wherein, if the file is in the cache memory, it will be loaded from the cache memory and otherwise it will be loaded from the distributed file system. The invention also relates to a client with a cache memory or to a proxy server with a cache memory for temporarily storing loaded files, and to a server of a distributed file system that makes files available to clients for loading.

In computer networks, files are no longer primarily stored locally on each client but are kept on different servers dispersed over the network, and are not loaded into the main memory or hard disk of a client until a particular file is needed by the client. Such a system is referred to as a distributed file system. Examples of such a distributed file system are the Internet, in which files in the Hypertext Markup Language (HTML) format can be loaded from Internet servers around the world, corporate intranets, or local area networks with several file servers, such as the Andrew File System (AFS), which was developed at Carnegie-Mellon University. A client obtains access to a file in the distributed file system by specifying an address, e.g., the URL (Uniform Resource Locator) for Internet access.

Internet browsers - these are specific programs for loading and displaying files from the Internet - establish on the hard disk of the client a cache memory in which loaded files are temporarily stored, so that for another access, these files need not be loaded again over the network but can be taken from the cache memory. In this way, renewed accesses to the same Internet page are considerably accelerated. Internet browsers using the method described are, for example, Netscape Navigator™ and Microsoft Explorer.

Furthermore, use is frequently made of so-called proxy servers which are disposed between one or more client computers and the distributed file system. These proxy servers, too, have a large cache memory in which the last loaded files are held temporarily in the hope of another access.

If, for example, a file is to be loaded from the Internet into a client, a check is made to see whether the same file is already contained in the cache memory. The criterion for the check as to whether the cache contains the file is the address of the file to be loaded, i.e., the cache memory contains the URL for each file stored therein. By simply comparing the specified URL with the stored URLs, it is determined whether the requested file is in the cache.

In many cases, however, a file is stored in different places in the data file system, for instance in different directories or on different Web sites. However, there is no way to determine whether it is the same file or whether the same file is already contained in the cache as a file that came from a different address, so that it would not have to be loaded again over the network.

It is therefore an object of the present invention to provide an improved method of caching files wherein identical files that came from different locations of a distributed file system are identified as being identical. Further objects of the invention are to provide a client, a proxy server, and a server for the improved method.

These objects are attained by the features of claims 1, 10, 11, and 12, respectively. Further developments of the invention are apparent from the dependent claims.

Advantages of the invention are that the caching of files, particularly from the Internet, is more efficient, that files are found in the cache memory independently of their address, and that seamless integration with existing systems and Web browsers is possible. A particular advantage of the invention is that it is automatically recognized when a file was updated and thus modified, because a modified file produces a different hash code while its address remains the same. The modified file can thus be loaded over the network instead of using the obsolete file from the cache.

The invention will become more apparent by reference to the following description of several embodiments taken in conjunction with the accompanying drawings, in which:
- Fig. 1: shows a client connected via a proxy server to a network having a remote server linked to it;
- Fig. 2: shows schematically the loading of a file from a distributed file system through a proxy server with a cache memory;
- Fig. 3: is a block diagram of a proxy server according to the invention;
- Fig. 4: is a block diagram of a client according to the invention; and
- Fig. 5: shows an example of the organization of the cache memory.

A basic idea of the invention is to compute a hash code from a file via a given algorithm and to use this hash code to check whether a file to be loaded is already contained in the cache or not.

Such a hash code is a code word of fixed length generated from a bit sequence of arbitrary length, the word length being determined by the algorithm used. The algorithm is designed so that it is highly unlikely that two different bit sequences will generate the same hash code. Each bit sequence is constituted by an entire file. The length of the hash code may be 128 bits, for example. Such a hash algorithm is described in detail in IETF RFC 1321 (Internet Engineering Task Force, Request for Comments). The algorithm described there, the MD5 algorithm, can be used to advantage in the invention since it is fast and generates a hash code with which the risk of two different files generating the same hash code is extremely small. Another property of this algorithm is that it is extremely difficult, if not impossible, to reverse the hashing algorithm using computer technology. As a consequence, it is not possible to 'blind' the cache with a bogus files in order to prevent loading of the true files.

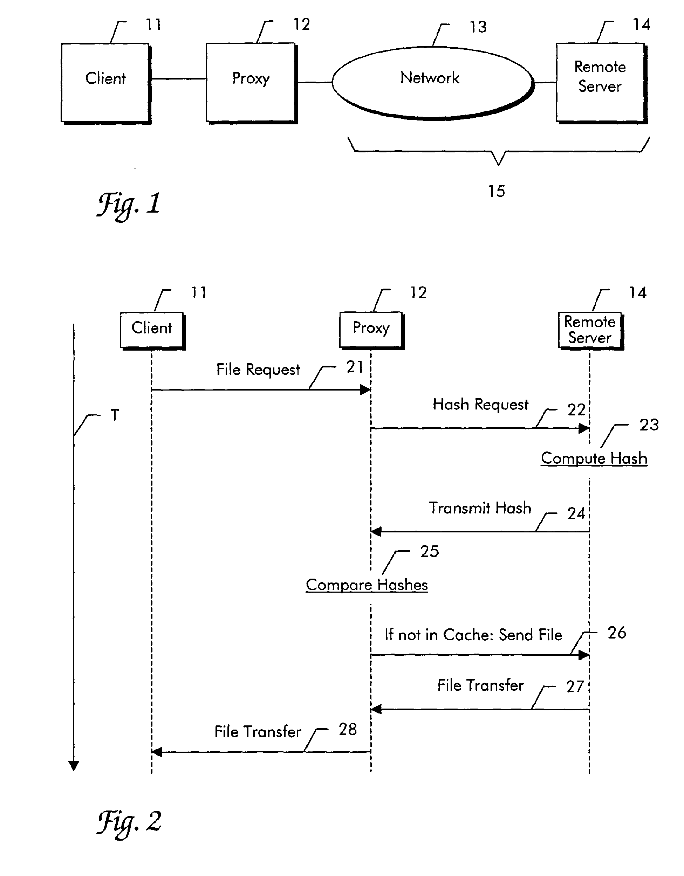

The schematic configuration of a distributed file system in a first embodiment is shown in Fig. 1. A client 11 is connected to a proxy server 12. Proxy server 12 is connected to a computer network 13, in this embodiment to the worldwide Internet. Also connected to computer network 13 is a remote server 14. Remote server 14 is shown only by way of example; actually, of course, a plurality of such servers are present in the Internet. Computer network 13 with its servers 14 represents a distributed file system. If client 11 wants to load a file from server 14, this request is handled via proxy server 12. The proxy server includes a cache memory in which the last loaded files are temporarily stored. If client 11 requests a file that has already been loaded and therefore is still contained in the cache, the proxy server will send this file directly from the cache to the client. Otherwise proxy server 12 will load the requested file from remote server 14 over network 13, store it in the cache, and then transfer it to client 11.

The proxy server, which is known per se, is a buffer between client 11 and Internet 13 which serves as part of a security system to protect against intrusion from outside. In general, several clients are connected to such a proxy server via an internal corporate network (intranet). Besides the protection function, however, the proxy server performs the above-described caching and thus expedites renewed accesses to the Internet.

Fig. 2 illustrates schematically the loading process. The actions and transfers between client 11, proxy server 12, and remote server 14 are plotted in time sequence T from top to bottom. A file, e.g., an HTML page, is to be loaded from remote server 14 into client 11. Client 11 therefore sends a file request 21 with the address of the requested file to proxy server 12. To be able to check its cache as to whether the requested file is contained therein, proxy server 12 needs the hash code belonging to the file. It therefore sends to remote server 14 a hash request 22 in which the requested file is specified with its address. Server 14 then computes the hash code of this file, 23, and sends a message containing the computed hash code back to the proxy server, 24. Proxy server 12 compares the hashes, 25, to determine whether the requested file is contained in the cache memory or not. If the file is already in the cache, it will be immediately transferred, 28, to the client. If the requested file is not in the cache, proxy server 12 will send a "send file" request, 26, to remote server 14, which then transfers the file, 27, to the proxy server, which stores it in its cache memory and transfers it, 28, to client 11.

To carry out the method according to the invention, remote server 14 includes an arithmetic unit as a means for computing a hash code for requested files. This may be a processor that executes a suitable control program adapted to compute the hash code of the file in response to a received request and to return the computed hash code to the client via an interface of server 14. Such servers dedicated to storing files for loading over a network are generally referred to as file servers or Web servers.

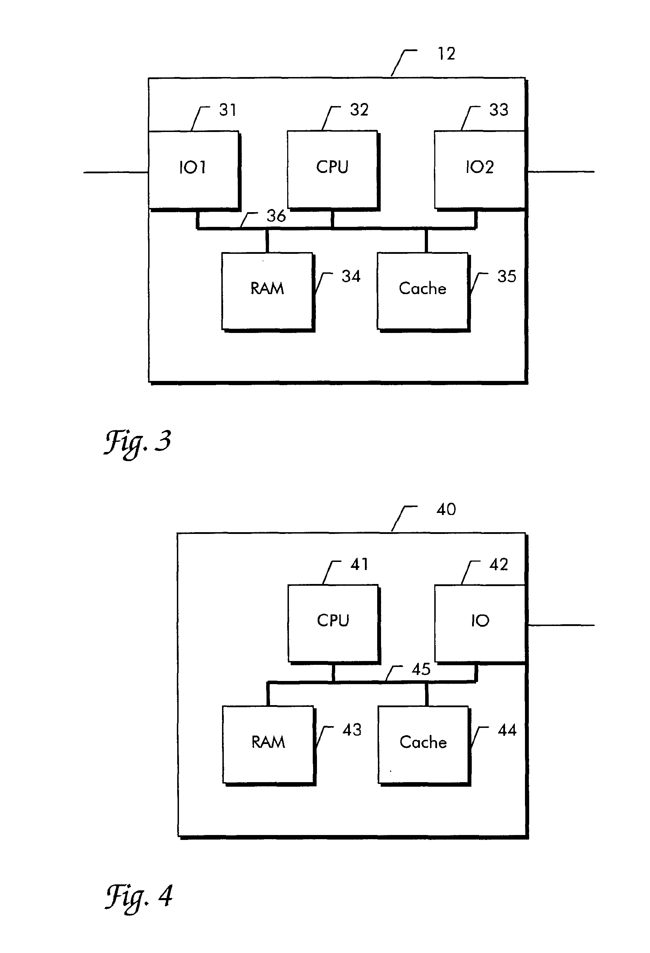

A block diagram of proxy server 12 in the first embodiment is shown in Fig. 3. Proxy server 12 has a first interface 31, which is connected to the client, a second interface 33, which is connected to the network, a cache memory 35, a processor 32, and a main memory 34. All these elements are interconnected by a bus system 36. Processor 32 controls the operation of the proxy server. It executes a control program stored in main memory 34 and containing a sequence of control instructions, and is programmed to perform the functions described in connection with Fig. 2, i.e., requesting the hash code from the remote server using the address of the file requested by the client, comparing the cache contents with the hash code of the requested file, and storing previously loaded files in the cache memory. The cache memory may be implemented on a hard disk of the proxy server, for example.

In another embodiment, shown in Fig. 4, the cache memory is implemented in the client 40 itself. A proxy server is not needed, but may be present optionally. Client 40 has an interface 42 to the network, a processor 41, a main memory 43, and a cache memory 44 implemented on a hard disk of the client. These elements are interconnected by a bus system 45.

Main memory 43 holds a control program that is executed by processor 41. The control program may be an Internet browser, for example. According to inputs by a user of the client, the control program causes files to be loaded from the distributed file system over the network into main memory. The cache memory contains files that have already been loaded, so that renewed accesses to the same files can be expedited. The processor controls the loading of files and the cache memory by checking prior to each loading process whether the file to be loaded is already contained in the cache memory, by writing each newly loaded file into the cache memory, and by clearing the cache memory from time to time, e.g., when its storage capacity has been used up. The processor thus serves to control the cache.

When a file is to be loaded from the distributed file system over the network, processor 41 first checks whether this file is already contained in cache 44. This check is also performed by means of a hash code computed from the file. To obtain the hash code, like in the first embodiment, a request may be sent to a remote server that offers the file. The server then computes the hash code and sends it as a message to the client.

Alternatively, the hash code may already be known in the client. This can be implemented to advantage in Internet browsers: When surfing through HTML pages on the Internet, a user comes across so-called links, which he can select. These links act as pointers to other URL addresses on the Internet. An URL consists of the specification of a server on the Internet, a path on this server, and a file name in this directory. If such links are selected, this means for the Internet browser that the file addressed by the URL address specified in the link is to be loaded. In the case of such links it is advantageous to specify not only the URL address to which the browser is to jump, but also the hash code of the file to which the link points. The client can then check by means of the hash code specified in the link whether the requested file is in the cache or not, without first contacting the server to which the link points.

If a proxy server is used in addition to the client described, the client will first search its local cache to see whether a requested file is contained therein, and if that is not the case, it will pass the file request to the proxy server, which, in turn, will search its cache for the file. If the file is not found in either of the two cache memories, it will be loaded from the remote server over the network.

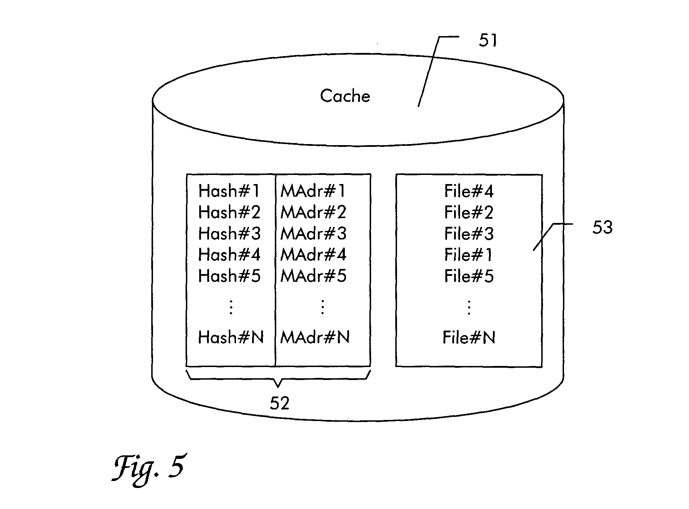

A cache memory both in the proxy server and in the client can be structured as shown schematically in Fig. 5. A first memory area 52 is reserved for a directory of cache memory 51. In a second memory area 53, the files stored in the cache are stored in an arbitrary order. Directory 52 contains a list of the hash codes of the stored files and, for each hash code, the memory address at which the associated file is stored in the second memory area 53. If the cache contents are to be checked to determine whether a particular file is in the cache, it is only necessary to look through the directory and compare the listed hash codes of the stored files with the hash code of the requested file. If the hash code of the requested file is found in the directory, the requested file will be found at the address in the second memory area 53 specified for this hash code.

Aside from the Internet applications described above, the caching according to the invention can be employed in corporate intranets of arbitrary size or in distributed file systems of the NFS (Network File System) or AFS (Andrew File System) type or in arbitrary other file systems for local area networks.

Besides the method described in which the hash code is requested from the remote server or contained in a link, it is advantageous if the servers of a distributed file system compute the hash codes of the respective files in response to each request relating to one or more files, e.g., in response to a request for a directory of a subdirectory, and dispatch them in the header of the communication protocol (HTTP, FTP, ...) used between client and server. In this way, the method becomes protocol-independent and the client already knows the hash codes of all files that can be accessed. Thus, as soon as one of these files is to be loaded, the cache can be searched using the known hash code.

The term "client" as used herein means any terminal that uses services of servers of a distributed file system and loads files from one of these servers. It may be a user-owned computer equipped with an Internet browser or any other network-capable terminal, such as a screen phone with Internet connection or a WAP-capable mobile phone (WAP = wireless application protocol).

In a further advantageous development of the invention, the above described modification of an HTML link containing the hash code of a file to be loaded can be used to implement a new kind of "search engine". Usually, a search engine serves to find a web page on the Internet that contains some key words defined in a query. Such search engines are well known by those skilled in the art and will thus not be explained in more detail. The purpose of the new search engine is to find at least one location in the network where a given document defined by its hash code could be found. This means that the query defines the hash code of the searched file and the query result by the search engine would be one or more network addresses like the URLs from which the searched document can be loaded. If the search engine has found the requested file upon those files registered with the search engine, it sends back the address of the requested file as a query result. Otherwise it send back an error message telling that the requested file could not be found.

Such a search engine can be implemented as a computer program which runs on a computer system. The computer system is equipped with a network card for receiving queries and for transmitting back query results, with a hard disk which holds a database with registered file addresses and corresponding hash codes, and with a processor which executes the computer program. The computer program is adapted to evaluate a received query, to compare the hash code defined in the query with those stored in the database, and to retrieve the address of the corresponding file from the database if the comparison yields a hash code that matches the query.

## Claims

1. A method of loading files from a distributed file system (15) into a client (11; 40) wherein a cache memory (35; 44) is provided for temporarily storing loaded files, wherein prior to each loading process, a check (25) is made to see whether a file to be loaded is present in the cache memory (35; 44) or not, and wherein, if the file is in the cache memory (35; 44), it will be loaded from the cache memory, and otherwise it will be loaded from the distributed file system (15),
**characterized in**
**that** a hash code is computed (23) from the file to be loaded, and that by means of the hash code, a check is made (25) to see whether the file is contained in the cache memory.

2. A method as claimed in claim 1 wherein the distributed file system (15) is a network (13) with a plurality of servers (14).

3. A method as claimed in claim 2 wherein the network (13) is the Internet or an intranet.

4. A method as claimed in claim 1 wherein the cache memory (35) is provided in a proxy server (12) interposed between the distributed file system (15) and the client (11).

5. A method as claimed in claim 1 wherein the cache memory (44) is provided in the client (40).

6. A method as claimed in claim 1 wherein the hash code is computed via the MD5 algorithm.

7. A method as claimed in claim 1 wherein the client (11) sends a request to a server (14) from which the file is to be loaded, wherein the server then computes and returns the hash code, and wherein subsequently the checking of the cache contents is done by means of the hash code.

8. A method as claimed in claim 1 wherein the hash code is defined in a hypertext link pointing at the file to be loaded.

9. A method as claimed in claim 1 wherein if the file to be loaded is not contained in the cache memory, a request is made to a search engine to retrieve an address at which the file can be found in the distributed file system.

10. A client (11; 40) for loading files from a distributed file system (15), particularly from the Internet, comprising a main memory (43) for storing the files, an interface (42) to the file system (15), a cache memory (44) for temporarily storing loaded files, and a control unit (41) for controlling the loading of the files and for controlling the cache memory (44), said control unit (41) being adapted to check prior to each loading of a file whether the file to be loaded is present in the cache memory (44) or not and, if the file is in the cache memory (44), to load it from the cache memory (44) and otherwise to load it from the distributed file system (15),
**characterized in**
**that** the control unit (41) is adapted to perform the check as to whether the file to be loaded is present in the cache memory (44) or not by means of a hash code computed from the file.

11. A proxy server (12) comprising a cache memory (35) for temporarily storing files to be loaded from a distributed file system (15) into a client (11; 40), a first interface (31) to the client, a second interface (33) to the distributed file system, and a control unit (32) for controlling the loading of the files and for controlling the cache memory (35), said control unit (32) being adapted to check prior to each loading of a file whether the file to be loaded is present in the cache memory (35) or not and, if the file is in the cache memory (35), to send it from the cache memory (35) via the first interface (31) to the client (13; 40) and otherwise to load the file from the distributed file system (15) via the second interface (33) and send it to the client (11;40) via the first interface (31),
**characterized in**
**that** the control unit (32) is additionally adapted to perform the check as to whether the file to be loaded is present in the cache memory (35) or not by means of a hash code computed from the file.

12. A server (14) of a distributed file system (15), particularly a file server or Web server, which is adapted to make files available to clients (11; 40) via a network (13) for loading,
**characterized in**
an arithmetic unit for computing a hash code for each of the files.

13. Search engine for finding an address at which a file to be loaded is located in a distributed file system, comprising
- receiving means for receiving a query defining a hash code of the file to be loaded;
- comparison means for comparing the hash defined in the query with hash codes of files registered with the search engine and for retrieving the address of the file to be loaded if the comparison yields a file with the same hash code; and
- transmitting means for transmitting back a query result containing the address of the file to be loaded if this is found and an error message otherwise.
